# EUROPEAN PATENT SPECIFICATION

(11) **EP 2 524 801 B1**
(45) Date of publication and mention of the grant of the patent: **04.03.2020**
(21) Application number: 12168278.5
(22) Date of filing: 16.05.2012
(51) Int. Cl.: B32B 9/04, B32B 27/04, B32B 27/28, B32B 33/00

(54) **Composite materials resistant to environmental agents**
Auf Umweltfaktoren resistente Verbundstoffmaterialien
Matériaux composites résistants aux agents environnementaux

(30) Priority: 17.05.2011 IT TO20110438
(43) Date of publication of application: 21.11.2012
(73) Proprietor: Leonardo S.p.A., 00195 Roma (IT)
(72) Inventor: Iannone, Michele, I-80058 TORRE ANNUNZIATA (Napoli) (IT)
(74) Representative: Gerbino, Angelo

(56) References cited:
- US-A1- 2004 232 389
- US-A1- 2011 088 931
- US-A1- 2011 135 884
- US-A1- 2011 216 020

## Description

The present invention relates to the field of the composite materials with a polymeric matrix, in particular for aeronautical applications.

All the polymeric materials, both thermoplastic, and thermosetting materials, once exposed to low-molecular-weight substances, such as water or organic solvents, are susceptible of absorbing the molecules of such substances which locate themselves between the macromolecules, causing a plasticization effect. Such an effect causes several property changes in the polymeric material, including the decrease of the glass transition temperature and of the elastic modules. In some cases, there can be a real chemical etching, which can lead to the partial or complete dissolution of the polymeric chain.

Therefore, in the use of polymeric materials as a matrix of composite materials for aeronautics field, such an effect has to be taken into account, as regards the action of some substances that are frequently used in aeronautics (organic solvents of the MEK, Jet Fuel, Skydrol hydraulic fluid type), as well as the action of atmospheric moisture. In the following of the present description, all the substances producing such an effect will be referred to as "environmental agents".

The mechanism by which the environmental agents etch the polymeric material is highly related to their ability of penetrating that material. In fact, it is the outer surface of the latter to be directly exposed to such agents, and therefore - with the exception of those cases in which a dissolution occurs - the action on the material mass takes place only after the inwardly penetration by the diffusion effect of the environmental agents.

The law describing the diffusion rate of a substance within a solid is the Fick's law, which, in the case of a monodimensional geometry (a solid having a very reduced thickness compared to the surface extension) can be expressed as Φx= -D δc/δx, where Φx is the substance flow in the thickness direction, D is the diffusion coefficient, c is the concentration thereof, x is the linear coordinate in the thickness direction.

Therefore, the diffusion rate is a critical parameter to the aims of the above-mentioned effect. In particular, when the material is constantly exposed to an environmental agent, the concentration of the latter decreases while moving away from the surface, and increases with time.

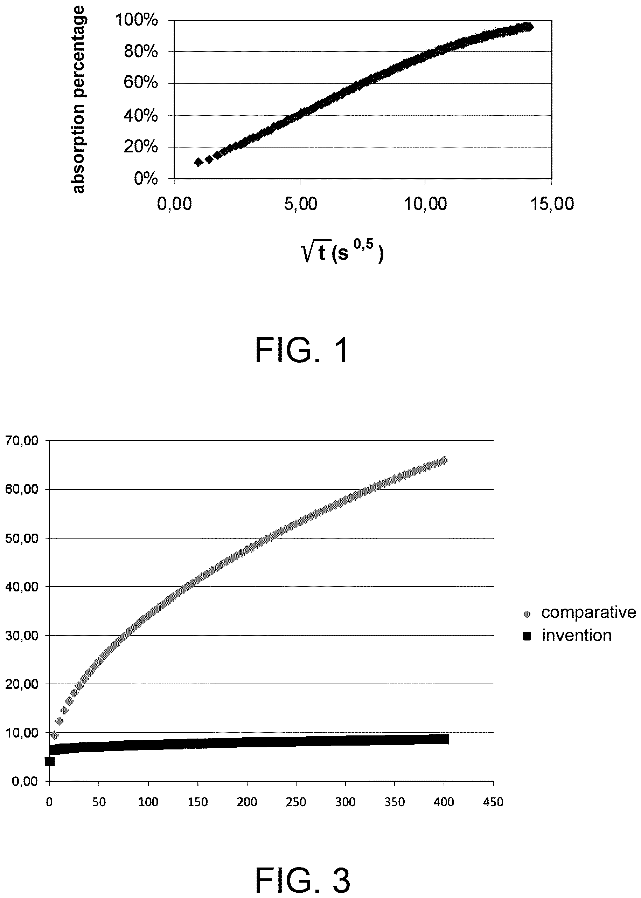

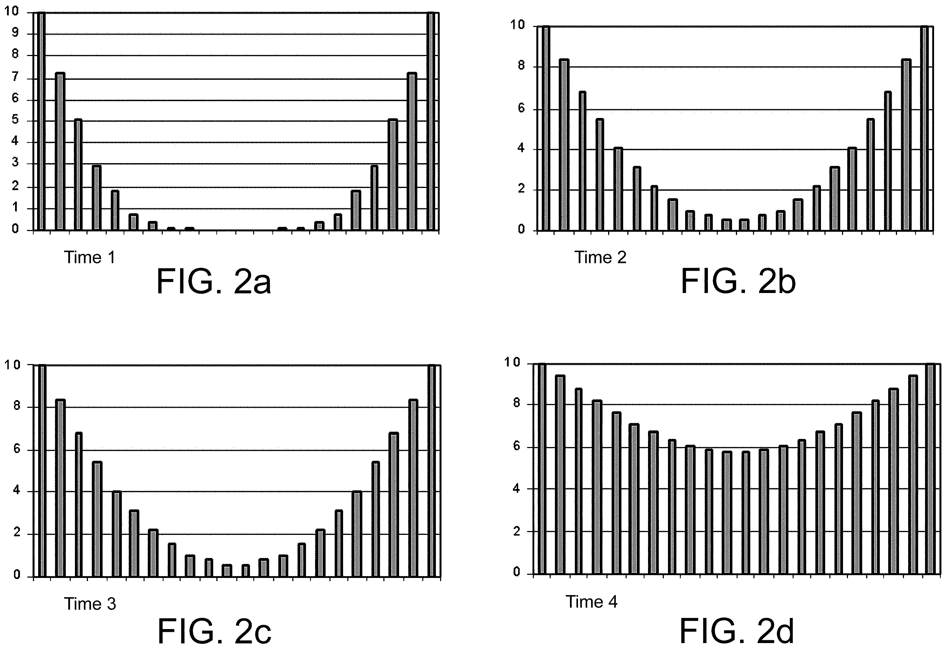

Fig. 1 illustrates the variation with time of the absorption percentage in the case of a linear diffusion, with reference to the moisture absorption in a composite material and taking the saturation value as 100%. Figs. 2a-2d schematically show the variation with time of the environmental agent concentration through the material thickness. It can be noticed that in the initial step (Fig. 2a) there are areas of the material that have not yet been reached by the environmental agent. The transitory period of such a phenomenon is as more prolonged in time as lower the diffusion coefficient is, and as larger the thickness is.

US-2011/0088931 discloses coatings of only one surface of a substrate, which comprise a layer formed by graphene, and a binder. Such coatings must necessarily comprise at least two layers having a different composition, and they are used to impart electromagnetic radiation shielding properties to electric and electronic devices and components.

The object of the present invention is to avoid or at least reduce the diffusion of the environmental agents in the composite materials with polymeric matrix, which is susceptible of causing the above-mentioned adverse effects.

Such an object is achieved by a composite film of polymeric material containing graphene, which can be used for coating structural elements employed in aeronautics, and in particular thanks to a layered article having the characteristics shown in the claim 1 below.

Another embodiment of the present invention is the manufacturing process fo claim 11. Preferred embodiments of the invention are set forth in the dependant claims.

According to the invention, the polymeric material is modified due to the addition of graphene, which induces a barrier effect, significantly slowing down the diffusion phenomenon, therefore confining it to the outermost area, without substantially affecting the internal layers of the layered article.

Particularly advantageous is the fact that graphene has a large specific surface, so that it can exert a significant barrier effect also when present in small amounts.

The graphene can be obtained from graphite, by separating the laminae of which it is composed. Each graphene lamina has the thickness of a single atomic layer. The interplanar space of the graphene layers in the graphite is 0.335 nm. Therefore, in a 1 mm thickness, there are about 3 (more precisely, 2.985) millions layers of graphene.

Graphite density is 2.25 g/cm³. The density of the polymeric matrixes varies in a range of about 1.2 g/cm³ (the epoxy resin density is about 1.16 g/cm³, the thermoplastic resin PEI density is 1.25 g/cm³).

Considering 1 cm² of a resin film, having a thickness of 1 mm, a total volume of 0.1 cm³ and a weight of 0.12 g are obtained. The addition of 1% by weight of graphene - that is, 0.0012 g which occupy a volume of about 0.0005 cm³ (0.0012/2.25) - translates - on a 1 cm² resin film - into a 0.005 mm thickness. Therefore, by what has been previously stated, a graphene surface of 15000 cm² is obtained, i.e., the theoretical equivalent of 15000 layers.

Therefore, the graphene-charged polymeric material film is in fact impermeabilized, in particular if the polymeric particles are oriented in the preferred direction of the film surface, which result is achieved by a bi-axial stretching process of the film, following the introduction of graphene.

Preferably, the film of the external layers of the inventive article has a thickness in the range comprised between 0.050 and 0.100 mm, and it contains graphene in a wt. percent comprised between 0.2 and 1.5%, preferably about 1%, in the form of particles having a variable surface dimension and mono-atomic thickness of about 0.335 nm.

The polymeric material of the film can be a thermoplastic or thermosetting material.

Further advantages and characteristics of the present invention will be apparent from the following detailed description, given by way of non-limitative example, with reference to the annexed drawings, in which:
Fig. 1 (already described) is a diagram setting forth in percentage of absorbed moisture (with reference to the saturation value) by a composite material as a function of the square root of time;
Figs. 2a-2d (already described) are diagrams illustrating in increasing times the concentration profile of an environmental agent through a given thickness of composite material;
Fig. 3 is a diagram setting forth the amount of environmental agent absorbed by a composite material as a function of the time for a film of the invention and a comparative film;
Fig. 4 schematically illustrates a first embodiment of a layered article according to the invention; and
Fig. 5 schematically illustrates a second embodiment of a layered article according to the invention.

With the aid of a numerical model based on the Fick's law, a calculation of the absorption in a polymeric film having a thickness 1 mm has been carried out, in order to predict the reduction therein of the absorption phenomenon of an environmental agent. The calculation has been repeated on the same film in which the addition of a graphene layer has been assumed, laying on a single surface, and covering 90% of the surface, on both sides in a plane at a 0.05 mm depth.

Fig. 3 illustrates the trend of the environmental agent concentration in time, in the situation with and without graphene. The amount of absorbed agent in the presence of graphene is about 10% that in the absence thereof, and it is mainly confined to the surface area or the close proximity of the surface. It shall be noticed that, keeping in mind what has been stated before regarding the huge amounts surface that can be obtained by small amounts of graphene, the hypotheses formed on the graphene surface used (that is, a single surface) are very conservative; therefore, the surface effect that can be obtained is practically far higher.

As previously stated, the polymeric materials that can be used can be both of the thermosetting type, and of the thermoplastic type, for example, polyetherimide (PEI), polyphenylene sulfide (PPS), polyetheretherketone (PEEK) and polyetherketoneketone (PEKK).

The thermosetting materials, among which the most frequently used are those with an epoxy matrix, generally show a good resistance to the solvents for aeronautical use (MEK, Skydrol, Jet fuel). For such materials, the use of graphene can improve very significantly the atmospheric moisture absorption, allowing the use of "dry" properties, instead of "wet" ones (that is, after the absorption of water), which are now mandatoryly used, in order to take into account for the environmental ageing during the service life. Therefore, an improvement of the allowed charges material (lighter structures), and the opportunity to test the materials and the structures under "dry" conditions (with lower times and certification costs) can be obtained.

In the case of the thermoplastic materials, in combination with what has been set forth above regarding the moisture absorption, which continues to be valid, it is necessary to take into account the sensitiveness of some of them, and particularly of the amorphous and semi-crystalline materials, to the solvents for aeronautical applications. Therefore, the presence of graphene can allow the use of amorphous and semi-crystalline thermoplastics, which instead could be excluded by their sensitiveness to the organic solvents. This applies particularly for PEI, which shows a good structural behaviour and a good processability, but which cannot be currently used for aeronautic structural applications, since it is sensitive to Skydrol.

The manufacture of graphene-loaded films takes place according to different modes, according to the thermosetting or thermoplastic nature of the polymeric material.

For thermosetting materials, nano-particles of graphene are preferably inserted into the base resin, to which other components (crosslinking agent and catalyst) are subsequently added. This allows operating on a non-polymerized/crosslinked resin, therefore, having a low viscosity and, as needed, the viscosity can be further lowered by increasing the temperature.

Similarly, the temperature can be increased in order to promote the addition of graphene nano-particles to the thermoplastic materials. In fact, for such materials, the increase in temperature - provided not to such levels as to compromise their chemical and thermal-oxydative stability - does not involve any problems, since, unlikely the thermosetting materials, they are not reactive.

In both cases, after the insertion of graphene nano-particles within the plastic material, an orientation of the surfaces of such particles can be obtained, in a direction preferably parallel to the film surface, thus promoting a bi-axial stretching - i.e., both in the longitudinal and the transversal directions, perpendicularly to the thickness - with stretching rollers, the use modes of which are well known to those of ordinary skill in the art.

Films of the above-described type are advantageously used for protecting against the diffusion of environmental agents of layered articles which can be used in the aeronautics field.

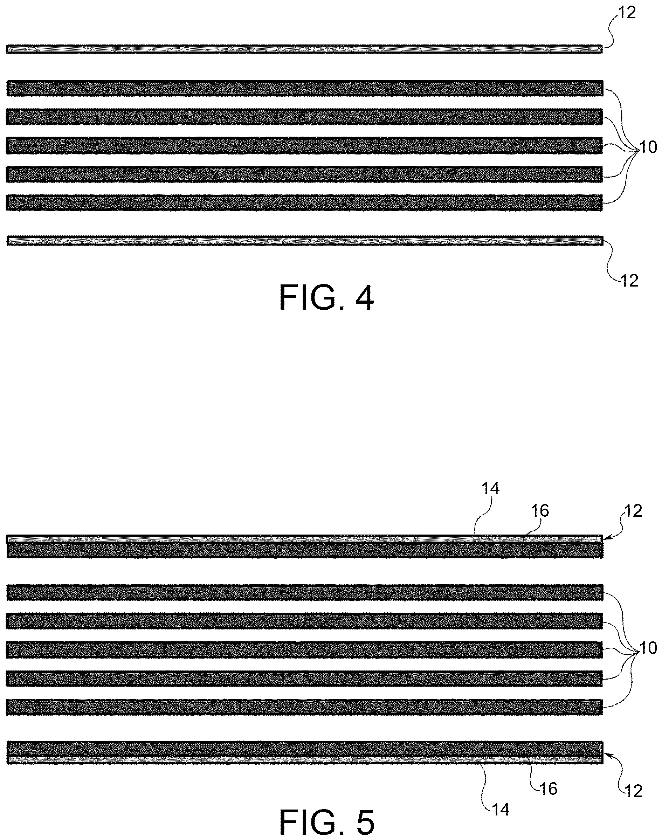

Fig. 4 illustrates a first embodiment of such a layered article, which is formed by a plurality of internal layers 10 sandwiched between two external layers 12, each of the latter being composed of any film of the above-described type.

The internal layers 10 are prepregs formed by a fibre-reinforced polymeric matrix, for example carbon, glass, or aramide, and having the same chemical nature as the polymeric material of the films of the external layers 12.

Advantageously, the internal layers 10 are present in a number in the range comprised between 4 and a maximum of 250 (thick laminates), have a thickness in the range comprised between 0.100 and 0.250 mm, and/or a fibre percent comprised between 0.60 and 0.70% by weight.

The technologies employed for producing such an article are the conventional ones in the aeronautics field. In the case of using a thermoplastic matrix, as an example, the thermoforming of laminates pre-consolidated under a hot press or by "continuous compression molding" and the automatic stratification with an apparatus having a consolidation head capable of reaching the process temperature of the used material can be mentioned. In the case of using a thermosetting matrix, as an example, the manual or automatic stratification and the successive polymerization in an autoclave (bagging + autoclaving) can be mentioned.

It has been experimentally observed that the absorption of environmental agents, such as water and organic solvents, by a layered article of the above-described type is lower than 10% compared to that of a layered article having a similar structure, except for the absence of the graphene-charged external layers.

Fig. 5 illustrates a second embodiment of a layered article, similar to that described before, except for a variation in the external layers 12.

In fact, each of the latter ones is a laminate formed by a film 14 of the invention, to the internal face of which a sub-layer 16 of pre-preg formed by a fibre-reinforced polymeric matrix and is of the same chemical nature as the polymeric material of the film 14 is intimately associated. The intimate association of a film 14 and a sub-layer 16 can be obtained by a hot processing, for example, by rolling.

In this case, again, it has been experimentally observed that the absorption of environmental agents, such as water and organic solvents, by a layered article of the above-described type is lower than 10% compared to that of a layered article having a similar structure, except for the absence of the laminated external layers.

It shall be apparent that, without affecting the principle of the invention, the implementation details and embodiments will be able to vary widely with respect to what has been described by way of example only, without for this departing from the claimed scope.

## Claims

1. A layered article employable in the aeronautics field, comprising a plurality of internal layers sandwiched between two external layers, wherein said internal layers are prepregs formed by a fibre-reinforced polymeric matrix, and each of the two external layers includes a composite film of polymeric material containing graphene.

2. The article according to claim 1, wherein said film has a thickness in the range comprised between 0.050 and 0.100 mm.

3. The article according to claim 1 or 2, wherein said film contains graphene in a wt. percent comprised between 0.2 and 1.5%, preferably about 1%.

4. The article according to any one of the previous claims, wherein said graphene is present in the form of particles having mono-atomic thickness.

5. The article according to any one of the previous claims, wherein said film is biaxially stretched.

6. The article according to any one of the previous claims, wherein said polymeric material of the film is thermoplastic, e.g., PEI, PPS, PEEK, PEKK, or thermoset, e.g., epoxy.

7. The article according to any one of the previous claims, wherein the polymeric matrix of the internal layers is of the same chemical nature as the polymeric material of said films of the external layers.

8. The article according to any one of the previous claims, wherein said internal layers are present in a number in the range comprised between 4 and 250, have a thickness in the range comprised between 0.100 and 0.250 mm, and/or a fibre percent comprised between 0.60 and 0.70% by weight.

9. The article according to any one of the previous claims, wherein each of the two external layers is a laminate formed by said film, to the inner face of which a sub-layer of prepreg formed by a polymeric matrix which is fibre-reinforced and is of the same chemical nature as the polymeric material of the film is intimately associated.

10. The article according to any one of the previous claims, wherein each of the two external layers consists in a composite film of polymeric material containing graphene.

11. A manufacturing process of an article according to any one of the previous claims, wherein the polymeric material is thermosetting and is added with graphene before being added with curing agent and curing catalyst.

## Patentansprüche

1. Geschichteter Gegenstand, der im Bereich der Luftfahrt einsetzbar ist, aufweisend eine Vielzahl von inneren Schichten, die sandwichartig zwischen zwei äußeren Schichten angeordnet sind, wobei die inneren Schichten aus einer faserverstärkten Polymermatrix gebildete Prepregs sind und jede der beiden äußeren Schichten eine Graphen enthaltende Verbundfolie aus Polymermaterial umfasst.

2. Gegenstand nach Anspruch 1, wobei die Folie eine Dicke im Bereich zwischen 0,050 und 0,100 mm aufweist.

3. Gegenstand nach Anspruch 1 oder 2, wobei die Folie zwischen 0,2 und 1,5 Gew.- %, bevorzugt etwa 1 Gew.-% Graphen enthält.

4. Gegenstand nach einem der vorangehenden Ansprüche, wobei das Graphen in Form von Partikeln in monoatomarer Dicke vorhanden ist.

5. Gegenstand nach einem der vorangehenden Ansprüche, wobei die Folie biaxial gestreckt ist.

6. Gegenstand nach einem der vorangehenden Ansprüche, wobei das Polymermaterial der Folie thermoplastisch, z.B. PEI, PPS, PEEK, PEKK, oder wärmehärtend, z.B. Epoxid, ist.

7. Gegenstand nach einem der vorangehenden Ansprüche, wobei die Polymermatrix der inneren Schichten von gleicher chemischer Beschaffenheit wie das Polymermaterial der Folien der äußeren Schichten ist.

8. Gegenstand nach einem der vorangehenden Ansprüche, wobei die inneren Schichten in einer Anzahl im Bereich zwischen 4 und 250 vorhanden sind, eine Dicke im Bereich zwischen 0,100 und 0,250 mm und/oder einen Faseranteil zwischen 0,60 und 0,70 Gew.-% aufweisen.

9. Gegenstand nach einem der vorangehenden Ansprüche, wobei jede der beiden äußeren Schichten ein durch die Folie gebildetes Laminat ist, mit dessen Innenfläche eine Unterschicht aus Prepreg eng verbunden ist, welche durch eine Polymermatrix gebildet ist, die faserverstärkt und von gleicher chemischer Beschaffenheit wie das Polymermaterial der Folie ist.

10. Gegenstand nach einem der vorangehenden Ansprüche, wobei jede der beiden äußeren Schichten aus einer Graphen enthaltenden Verbundfolie aus Polymermaterial besteht.

11. Herstellungsverfahren eines Gegenstands nach einem der vorangehenden Ansprüche, wobei das Polymermaterial wärmehärtend ist und mit Graphen versetzt wird, bevor es mit Härter und Härtungskatalysator versetzt wird.

## Revendications

1. Article en couches utilisable dans le domaine aéronautique, comprenant une pluralité de couches internes prises en sandwich entre deux couches externes, dans lequel lesdites couches internes sont des préimprégnés formés par une matrice polymère renforcée par des fibres, et chacune des deux couches externes inclut un film composite de matériau polymère contenant du graphène.

2. Article selon la revendication 1, dans lequel ledit film possède une épaisseur dans la plage comprise entre 0,050 et 0,100 mm.

3. Article selon la revendication 1 ou 2, dans lequel ledit film contient du graphène en un pourcentage en poids compris entre 0,2 et 1,5 %, de préférence d'environ 1 %.

4. Article selon l'une quelconque des revendications précédentes, dans lequel ledit graphène est présent sous la forme de particules ayant une épaisseur mono-atomique.

5. Article selon l'une quelconque des revendications précédentes, dans lequel ledit film est étiré de manière biaxiale.

6. Article selon l'une quelconque des revendications précédentes, dans lequel ledit matériau polymère du film est un thermoplastique, par exemple, le PEI, le PPS, le PEEK, le PEKK, ou un thermodurci, par exemple, un époxy.

7. Article selon l'une quelconque des revendications précédentes, dans lequel la matrice polymère des couches internes est de la même nature chimique que le matériau polymère desdits films des couches externes.

8. Article selon l'une quelconque des revendications précédentes, dans lequel lesdites couches internes sont présentes en un nombre dans la plage comprise entre 4 et 250, possèdent une épaisseur dans la plage comprise entre 0,100 et 0,250 mm et/ou un pourcentage de fibres compris entre 0,60 et 0,70 % en poids.

9. Article selon l'une quelconque des revendications précédentes, dans lequel chacune des deux couches externes est un stratifié formé par ledit film, sur la face interne duquel une sous-couche de préimprégné, formée par une matrice polymère qui est renforcée par des fibres et est de la même nature chimique que le matériau polymère du film, est intimement associée.

10. Article selon l'une quelconque des revendications précédentes, dans lequel chacune des deux couches externes est constituée d'un film composite de matériau polymère contenant du graphène.

11. Procédé de fabrication d'un film d'un article selon l'une quelconque des revendications précédentes, dans lequel le matériau polymère est thermodurcissable et est additionné de graphène avant d'être additionné d'un agent de durcissement et d'un catalyseur de durcissement.
